# EUROPEAN PATENT SPECIFICATION

(11) **EP 3 268 699 B1**
(45) Date of publication and mention of the grant of the patent: **30.03.2022**
(21) Application number: 15708837.8
(22) Date of filing: 11.03.2015
(51) Int. Cl.: G01F 1/66, G01S 7/523

(54) **RECIPROCAL TRANSCEIVER CIRCUIT FOR FLOW METER**
REZIPROKALER SENDEEMPFÄNGERSCHALTKREIS FÜR DURCHFLUSSMESSER
CIRCUIT ÉMETTEUR-RÉCEPTEUR RÉCIPROQUE POUR DÉBITMÈTRE

(43) Date of publication of application: 17.01.2018
(73) Proprietor: Danfoss A/S, 6430 Nordborg (DK)
(72) Inventor: JESPERSEN, Lars, 6400 Sønderborg (DK)
(74) Representative: Inspicos P/S
(86) International application number: PCT/EP2015/055035
(87) International publication number: WO 2016/141981

(56) References cited:
- EP-A1- 2 383 550
- DE-A1- 10 048 959
- US-A- 4 902 982

## Description

### FIELD OF THE INVENTION

The present invention relates to a transceiver circuit for flow meters. In particular, the present invention relates to a reciprocal transceiver circuits for ultrasonic flow meters.

### BACKGROUND OF THE INVENTION

Various types of transceiver circuits suitable for in particular ultrasonic flow meters have been suggested over the years.

In general the performance of ultrasonic flow meters, especially at low flow rates, is directly dependent on delay differences in the signal paths (upstream vs. downstream) of the front end circuit connected to the ultrasonic transducers. Very small delay differences may cause measurement errors in the order of some percent's at low flow rates. Furthermore, delay differences may be induced by differences in the ultrasonic transducers. These errors can be removed during calibration, but their variation over time and temperature will still pose a problem. Moreover, calibration at low flow rates is time consuming and hence costly. Other circuit topologies that solve the above-mentioned delay issues exist, but these circuit topologies often require expensive amplifiers.

One approach has been suggested in DE 10 048 959 which discloses a circuit topology using a two-input operational amplifier, where the positive input is connected to a transmit signal generator and the negative input is connected to the transducers via a series impedance, Zt, and a switching arrangement. Furthermore the negative input serves as the feedback point from the amplifier output via a feedback impedance Zf.

One significant drawback of the circuit topology suggested DE 10 048 959 is that the amplifier inputs are driven in different ways when transmitting and receiving. When transmitting, the input circuitry is driven over a large common mode voltage range, corresponding to the peak-to-peak value of the signal generator, Vtx. When receiving, the inputs are held in a constant operating point by a quiet transmit signal generator. The different ways of driving the input circuitry influences the overall reciprocity of the suggested circuit.

It may be seen as an object of embodiments of the present invention to provide a reciprocal transceiver circuit for flow meters, such as ultrasonic flow meters.

It may be seen as a further object of embodiments of the present invention to provide a transceiver circuit using a simple circuit topology.

### DESCRIPTION OF THE INVENTION

The above-mentioned objects are complied with by providing, in a first aspect, a transceiver circuit for a flow meter comprising a common signal path for signals to be transmitted and received, the transceiver circuit comprising a generator circuit, a signal processing circuit and a transimpedance amplifier comprising an inverting amplifier, wherein
- the generator circuit is operatively connected to an inverting input terminal of the inverting amplifier of the transimpedance amplifier,
- the signal processing circuit is operatively connected to an output terminal of the transimpedance amplifier, and
- the transimpedance amplifier further comprises a combined input/output terminal being operatively connectable to one or more associated transducers, and wherein the transimpedance amplifier provides a separate transmitting impedance ZTx between the input terminal and the combined input/output terminal, and a separate receiving impedance ZRx between the combined input/output terminal and the output terminal.

Term transceiver circuit is to be understood as a circuit that is capable of both transmitting and receiving signals via a number of associated transducers. The signals being transmitted and/or received by the associated transducers may be ultrasonic signals. Such ultrasonic signals are here to be understood as signals having frequencies from 100 kHz to 10 MHz, such as preferably around 1 MHz. It should however be noted that other frequency ranges may be applicable as well.

The proposed transceiver circuit is advantageous in that it has a common signal path for transmitted and received signals. Hence, delay differences between upstream and downstream (i.e. transmitting and receiving) signals are essentially avoided. Also, the transceiver circuit made be implemented using a simple circuit topology, possible including only discrete components.

The transceiver circuit according to the present invention may be operated as a front end transceiver circuit. The term front end is here to be understood as a circuit being operatively connected to, either directly or indirectly, the associated transducers. The present invention finds its use in relation to flow meters adapted to measure flow speeds of liquids and/or gasses.

Generally, a transimpedance amplifier is a current to voltage converter.

Preferably, the input and output terminals are dedicated input and output terminals, respectively. The term dedicated is here to be understood as terminals only being used as either an input or an output terminal.

Preferably, the generator circuit has an output impedance, Zout, which is essentially constant. The generator circuit is adapted to generate periodic signals, such as sinusoidal signals, square wave signals etc. The signals from the generator circuit may be provided in bursts having durations of an appropriate number of periods. Thus, the burst signals may comprise an appropriate number of periods of sinusoidal signals, square wave signals or even a single-step function.

The transceiver circuit may further comprise a feedback circuit being operatively connected between the combined input/output terminal and the generator circuit. This feedback circuit is adapted to shape, such as by band-pass filtering, the signals provided by the generator circuit.

The transceiver circuit may further comprise an additional fixed or variable impedance, Zg, between the combined input/output terminal and a reference potential, such as ground. The aim of the variable impedance, Zg, is to be able to compensate for changes in the loop gain caused by changes made to the receiving impedance ZRx.

The transceiver circuit may further either comprise, or being connected to, one or more controllable switch/multiplexer for providing signals to and/or from associated receiving and/or transmitting transducers, the one or more controllable switches/multiplexers being operatively connected to the combined input/output terminal. Thus, the controllable switch/multiplexer may provide signals to and from a pair of transducers. Each of said pair of transducers may be operated as a transmitting transducer as well as a receiving transducer.

The transceiver circuit may further comprise, or being connected to, additional controllable switches/multiplexers for providing signals to and/or from associated receiving and/or transmitting transducers. The additional switches/multiplexers may be controlled individually so that signals may be directed to and/or from a plurality of transducers in an independent manner.

The switches/multiplexers may be implemented as a number of different switch/multiplexer types - either as single pole, single throw (SPST) switches or as a multiplexer. Each element of the switch or multiplexer may be a simple integrated or discrete MOSFET switch or a more elaborated T-type switch to enhance cross talk performance between transducers. It may also be combined with short circuit switches across the transducers to further enhance cross talk between transducers.

In the present content the term transducer is to be understood as either a transmitting or receiving transducer. As an example piezo-electric transducers being capable of both generating and detecting ultrasonic signals may be applicable in relation to the present invention.

In a second aspect the present invention relates to a flow meter comprising a transceiver circuit according to the first aspect of the present invention. In terms of implementation the transceiver circuit may be implemented and configured as disclosed in relation to the first aspect.

The flow meter may further comprise a plurality of transducers being connectable to the combined input/output terminal of the transimpedance amplifier. At least a number of the plurality of transducers may be adapted to both transmit and receive signals. The plurality of transducers facilitate that signals, such as ultrasonic signals, may be sent both upstream and downstream relative to the direction of a given flow.

An amplifier may be operatively connected to the output terminal of the transimpedance amplifier. The gain of this amplifier may be variable. This may be advantageous in relation to the following signal processing. In fact, the gain of the amplifier may be variable on-the-fly, i.e. it may be changed at any time, such as between transmitting and receiving.

### BRIEF DESCRIPTION OF THE DRAWINGS

The present invention will now be described in further details with reference to the accompanying figures, wherein
Fig. 1 shows the principle of the present invention,
Fig. 2 shows the principle of a transimpedance amplifier,
Fig. 3 shows three embodiments of the generator circuit, and
Fig. 4 shows an embodiment of the present invention.

While the invention is susceptible to various modifications and alternative forms specific embodiments have been shown by way of examples in the drawings and will be described in detail herein. It should be understood, however, that the invention is not intended to be limited to the particular forms disclosed. Rather the invention is limited by the appended claims.

### DETAILED DESCRIPTION OF THE INVENTION

In its most general aspect the present invention relates to a transceiver circuit topology that is capable of providing a stable zero flow offset of zero in flow meters, such as in ultrasonic flow meters. Ideally the transceiver circuit topology of the present invention is independent on influences from temperature and varying transducer impedances.

To avoid delay differences in the transceiver circuit, the present invention suggests a circuit topology with a single common signal path for both upstream and downstream signals, i.e. for signals to be either transmitted or received. Moreover, the transceiver circuit of the present invention offers that associated transducers can be operated in a reciprocal manner in order to avoid influences from different transceiver impedances.

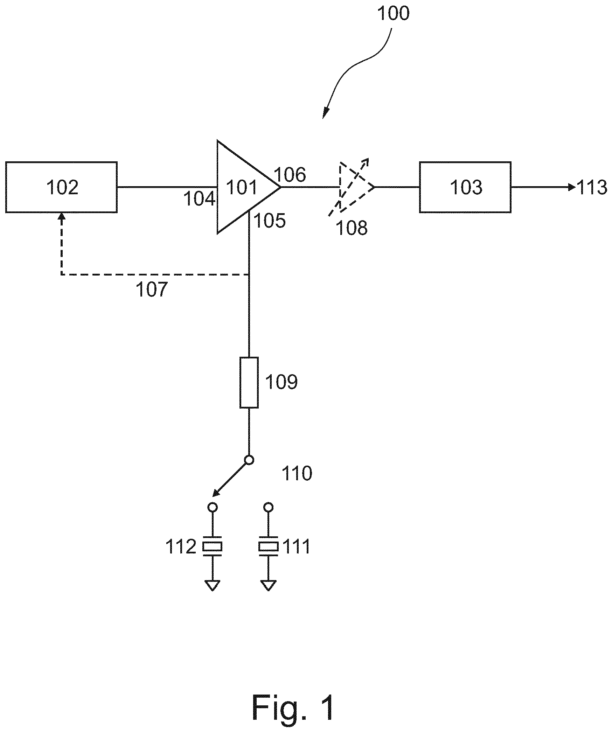

Referring now to Fig. 1 the components of the transceiver circuit 100 of the present invention are depicted. The main components of the transceiver circuit 100 are the transimpedance amplifier 101 having an input terminal 104, an output terminal 106 and a combined input/output terminal 105.

During transmitting the transimpedance amplifier 101 is driven by the signal generator circuit 102. The transceiver circuit 100 is operated as follows:
A low impedance transmit signal is generated at the combined input/output terminal 105 of the transimpedance amplifier 101. The combined input/output terminal 105 drives one of the transducers 111, 112 through the transducer termination impedance 109 and the switch/multiplexer 110.

It should be noted that the number of transducers may differ from the two shown in Fig. 1. Thus, the number of transducers may be three, four, five or even more. Also, the number of switches/multiplexers may be more than one. In that case each of the switches/multiplexers may be controlled individually.

During receiving, the signal generator circuit 102 is not transmitting, and the signal from one of the two transducers 111, 112 is provided to the combined input/output terminal 105 of transimpedance amplifier 101 through the switch/multiplexer 110 and transducer termination impedance 109.

The output signal from the transimpedance amplifier 106 may be further amplified in the amplifier 108 (dashed line) before the final output signal 113 is provided via the signal processing circuit 103. This further amplification in amplifier 108 may be a variable or a fixed amplification, and it may depend on whether signals are transmitted or received. It should be noted that the amplifier 108 may form part of the signal processing circuit 103.

As indicated by the dashed line in Fig. 1 the transceiver circuit could optionally include a negative feedback 107 from the combined input/output terminal of the transimpedance amplifier 101 to the signal generator circuit 102. The negative feedback facilitates that a sophisticated feedback control, including for example band-pass filtration, may be provided. The negative feedback may be implemented in various ways, such as by using both passive and active components like amplifiers, transistors, transformers etc.

The transducers 111 and 112 are only shown schematically. In practice, the transducers 111, 112 may include various series and parallel impedances. The transducers 111, 112 are capable of transmitting and/or receiving signals, such as ultrasonic signals. The switch/multiplexer 110 may be implemented as a number of different switch/multiplexer types - either as SPST switches or as a multiplexer.

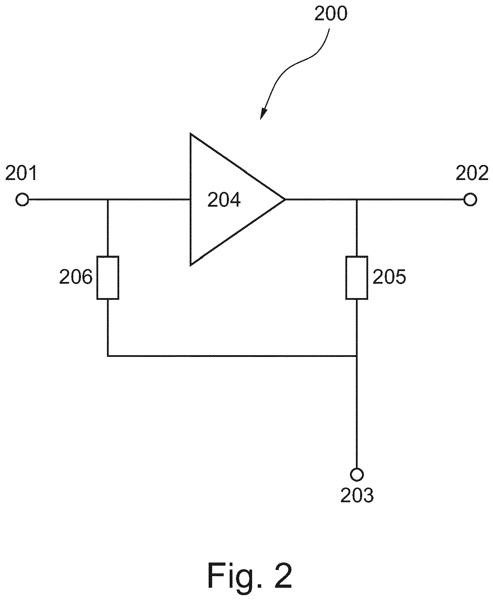

Fig. 2 shows a transimpedance amplifier 200 having input 201, output 202 and combined input/output 203. The transimpedance amplifier comprises an inverting amplifier 204, a separate transmitting impedance 206 between the input terminal and the combined input/output terminal, and a separate receiving impedance 205 between the combined input/output terminal and the output terminal.

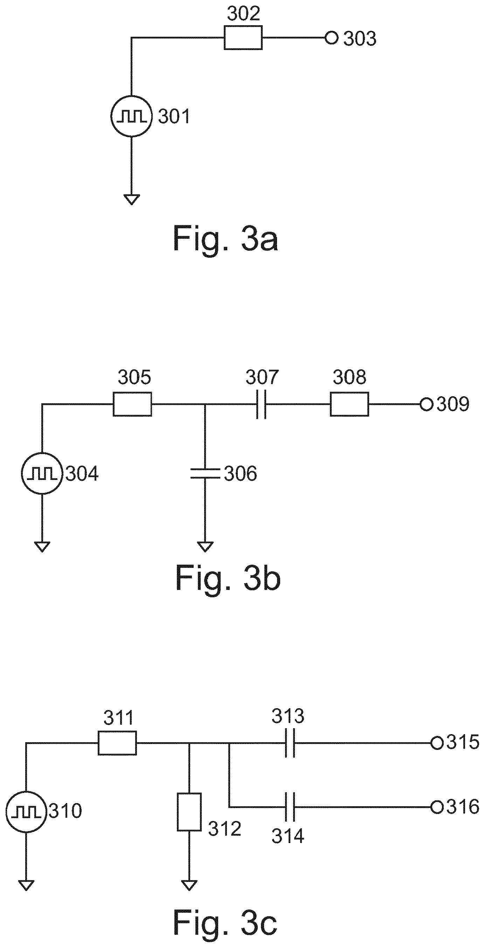

Fig. 3 shows three possible implementations of the signal generator circuit which is adapted to generate periodic signals in bursts, such as sinusoidal signals or square wave signals having an appropriate number of periods. As shown in Fig. 3a the signal generator circuit may include a square wave generator 301 coupled to a transmitting impedance 302 before reaching the output terminal 303.

Alternatively, the signal generator circuit may include a first order band-pass filter as shown in Fig. 3b in order to shape and remove the DC content from the square ware signal from the signal generator 304. The band-pass filter is implemented using resistor 305 and 308, and capacitors 306 and 307. The output signal is provided at the output terminal 309.

An even more sophisticated signal generator circuit is shown in Fig. 3c where a feedback signal from the combined input/output terminal of the transimpedance amplified is provided to input terminal 316. This feedback signal facilitates that a second order band-pass filtration of the generated square wave signal 310 becomes available. The resistors 311 and 312, and the capacitors 313 and 314 facilitate, in combination with the other circuit components, including the transimpedance amplifier, a second order band-pass filtration and shaping of the square ware signal from the signal generator 304.

It should be noted that the signal generator circuit may be implemented in alternative ways which may deviate from the implementations depicted in Fig 3.

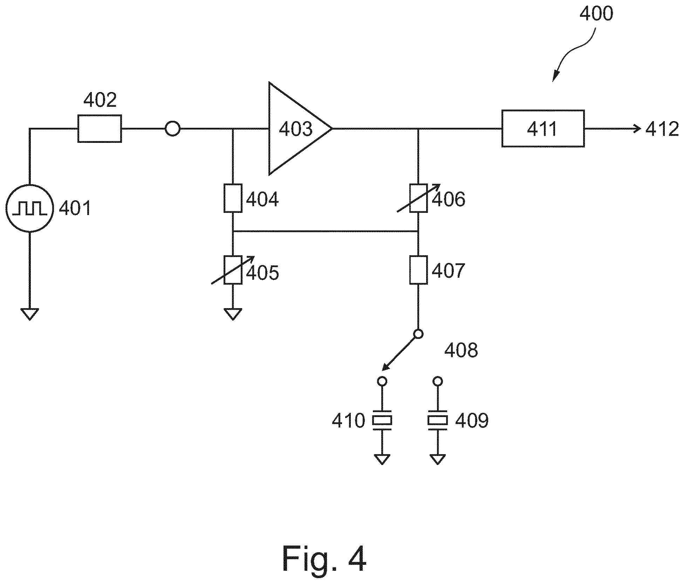

Referring now to Fig. 4 another embodiment of the transceiver circuit 400 of the present invention is depicted. In Fig. 4 the signal generator circuit comprises a signal generator 401 and an output impedance 402. The transimpedance amplifier comprises an inverting amplifier 403, a fixed transmitting impedance 404 between the input terminal and the combined input/output terminal, and a variable receiving impedance 406 between the combined input/output terminal and the output terminal. The purpose of this variable receiving impedance 406 is to make the receiving gain variable. However, in terms of reciprocity such a variable receiving gain will only operate properly in case another variable impedance 405 is inserted between the combined input/output terminal and a reference potential, such as ground. The function of the variable impedance 405 is to compensate for changes in the loop gain caused by changes made to the receiving impedance 406.

Finally, two transducers 409, 410 are coupled to the combined input/output terminal of transimpedance amplifier through the switch/multiplexer 408 and transducer termination impedance 407.

## Claims

1. A transceiver circuit (100) for a flow meter comprising a common signal path for signals to be transmitted and received, the transceiver circuit (100) comprising a generator circuit (102), a signal processing circuit (103) and a transimpedance amplifier (101, 200) comprising an inverting amplifier (204), wherein
- the generator circuit (102) is operatively connected to an inverting input terminal (104, 201) of the inverting amplifier (204) of the transimpedance amplifier (101, 200),
- the signal processing circuit (103) is operatively connected to an output terminal of the transimpedance amplifier (101, 200), and
- the transimpedance amplifier (101, 200) further comprises a combined input/output terminal (105, 203) being operatively connectable to one or more associated transducers (111, 112), and wherein the transimpedance amplifier (101, 200) provides a separate transmitting impedance ZTx (206) between the input terminal (201) and the combined input/output terminal (203), and a separate receiving impedance ZRx (205) between the combined input/output terminal (203) and the output terminal (202).

2. A transceiver circuit (100) according to claim 1, wherein the input and output terminals (201, 202) are dedicated input and output terminals, respectively.

3. A transceiver circuit (100) according to any of claims 1-2, wherein the generator circuit (102) has an output impedance Zout, and wherein the ratio ZTx/Zout is essentially constant.

4. A transceiver circuit (100) according to any of claims 1-3, wherein the generator circuit (102) is adapted to generate periodic signals.

5. A transceiver circuit (100) according to any of claims 1-4, further comprising a feedback circuit (107) being operatively connected between the combined input/output terminal (105) and the generator circuit (102).

6. A transceiver circuit (100) according to claim 5, wherein the feedback circuit (107) is adapted to shape, such as by band-pass filtering, the signals provided by the generator circuit (102).

7. A transceiver circuit (100) according to any of claims 1-6, further comprising an additional fixed or variable impedance Zg (405) between the combined input/output terminal and a reference potential.

8. A transceiver circuit (100) according to any of claims 1-7, further comprising one or more controllable switches/multiplexers (110) for providing signals to and/or from associated receiving and/or transmitting transducers (111, 112), the one or more controllable switches/multiplexers (110) being operatively connected to the combined input/output terminal (105).

9. A flow meter comprising a transceiver circuit (100) according to any of claims 1-8.

10. A flow meter according to claim 9, further comprising a plurality of transducers (111, 112) being connectable to the combined input/output terminal (105) of the transimpedance amplifier (101).

11. A flow meter according to claim 10, wherein at least a number of the plurality of transducers (111, 112) are adapted to both transmit and receive signals.

12. A flow meter according to any of claims 8-11, further comprising an amplifier (108) being operatively connected to the output terminal (106) of the transimpedance amplifier (101).

13. A flow meter according to claim 12, wherein the gain of the amplifier is variable.

14. A flow meter according to claim 13, wherein the gain of the amplifier is variable on-the-fly.

## Patentansprüche

1. Sender-Empfänger-Schaltkreis (100) für ein Durchflussmessgerät, das einen gemeinsamen Signalweg für Signale, die gesendet und die empfangen werden sollen, umfasst, wobei der Sender-Empfänger-Schaltkreis (100) einen Generatorschaltkreis (102), einen Signalverarbeitungsschaltkreis (103) und einen Transimpedanzverstärker (101, 200), der einen invertierenden Verstärker (204) umfasst, umfasst, wobei
- der Generatorschaltkreis (102) wirksam mit einem invertierenden Eingangsanschluss (104, 201) des invertierenden Verstärkers (204) des Transimpedanzverstärkers (101, 200) verbunden ist,
- der Signalverarbeitungsschaltkreis (103) wirksam mit einem Ausgangsanschluss des Transimpedanzverstärkers (101, 200) verbunden ist und
- der Transimpedanzverstärker (101, 200) ferner einen kombinierten Eingangs-/Ausgangsanschluss (105, 203) umfasst, der wirksam mit einem oder mehreren dazugehörigen Wandlern (111, 112) verbunden werden kann, und wobei der Transimpedanzverstärker (101, 200) eine gesonderte Sendeimpedanz ZTx (206) zwischen dem Eingangsanschluss (201) und dem kombinierten Eingangs-/Ausgangsanschluss (203) und eine gesonderte Empfangsimpedanz ZRx (205) zwischen dem kombinierten Eingangs-/Ausgangsanschluss (203) und dem Ausgangsanschluss (202) bereitstellt.

2. Sender-Empfänger-Schaltkreis (100) nach einem der Anspruch 1, wobei der Eingangs- und der Ausgangsanschluss (201, 202) jeweils ein fester Eingangs- beziehungsweise Ausgangsanschluss sind.

3. Sender-Empfänger-Schaltkreis (100) nach einem der Ansprüche 1 bis 2, wobei der Generatorschaltkreis (102) eine Ausgangsimpedanz Zout aufweist und wobei das Verhältnis ZTx/Zout im Wesentlichen konstant ist.

4. Sender-Empfänger-Schaltkreis (100) nach einem der Ansprüche 1 bis 3, wobei der Generatorschaltkreis (102) angepasst ist, um periodische Signale zu erzeugen.

5. Sender-Empfänger-Schaltkreis (100) nach einem der Ansprüche 1 bis 4, der ferner einen Rückkopplungsschaltkreis (107) umfasst, der wirksam zwischen dem kombinierten Eingangs-/Ausgangsanschluss (105) und dem Generatorschaltkreis (102) angeschlossen ist.

6. Sender-Empfänger-Schaltkreis (100) nach Anspruch 5, wobei der Rückkopplungsschaltkreis (107) angepasst ist, um, wie beispielsweise durch Bandpassfilterung, die Signale, die durch den Generatorschaltkreis (102) bereitgestellt werden, zu formen.

7. Sender-Empfänger-Schaltkreis (100) nach einem der Ansprüche 1 bis 6, der ferner eine zusätzliche feste oder veränderliche Impedanz Zg (405) zwischen dem kombinierten Eingangs-/Ausgangsanschluss und einem Referenzpotential umfasst.

8. Sender-Empfänger-Schaltkreis (100) nach einem der Ansprüche 1 bis 7, der ferner einen oder mehrere regelbare Schalter/Mehrfachkoppler (110) zum Bereitstellen von Signalen zu und/oder von zugehörigen empfangenden und/oder sendenden Wandlern (111, 112) umfasst, wobei der eine oder die mehreren regelbaren Schalter/Mehrfachkoppler (110) wirksam mit dem kombinierten Eingangs-/Ausgangsanschluss (105) verbunden sind.

9. Durchflussmessgerät, das einen Sender-Empfänger-Schaltkreis (100) nach einem der Ansprüche 1 bis 8 umfasst.

10. Durchflussmessgerät nach Anspruch 9, das ferner eine Vielzahl von Wandlern (111, 112) umfasst, die mit dem kombinierten Eingangs-/Ausgangsanschluss (105) des Transimpedanzverstärkers (101) verbunden werden können.

11. Durchflussmessgerät nach Anspruch 10, wobei wenigstens eine Anzahl der Vielzahl von Wandlern (111, 112) angepasst ist, um Signale sowohl zu senden als auch zu empfangen.

12. Durchflussmessgerät nach einem der Ansprüche 8 bis 11, das ferner einen Verstärker (108) umfasst, der wirksam mit dem Ausgangsanschluss (106) des Transimpedanzverstärkers (101) verbunden ist.

13. Durchflussmessgerät nach Anspruch 12, wobei der Verstärkungsgrad des Verstärkers veränderlich ist.

14. Durchflussmessgerät nach Anspruch 13, wobei der Verstärkungsgrad des Verstärkers während des Betriebs veränderlich ist.

## Revendications

1. Circuit d'émetteur-récepteur (100) pour un débitmètre comprenant un trajet de signal commun pour les signaux à transmettre et à recevoir, le circuit d'émetteur-récepteur (100) comprenant un circuit de générateur (102), un circuit de traitement de signal (103) et un amplificateur de transimpédance (101, 200) comprenant un amplificateur inverseur (204), dans lequel
- le circuit de générateur (102) est fonctionnellement connecté à une borne d'entrée inverseuse (104, 201) de l'amplificateur inverseur (204) de l'amplificateur de transimpédance (101, 200),
- le circuit de traitement de signal (103) est connecté fonctionnellement à une borne de sortie de l'amplificateur de transimpédance (101, 200), et
- l'amplificateur de transimpédance (101, 200) comprend en outre une borne d'entrée/sortie combinée (105, 203) pouvant être connectée de manière fonctionnelle à un ou plusieurs transducteurs associés (111, 112), et dans lequel l'amplificateur de transimpédance (101, 200) fournit une impédance de transmission séparée ZTx (206) entre la borne d'entrée (201) et la borne d'entrée/sortie combinée (203), et une impédance de réception séparée ZRx (205) entre la borne d'entrée/sortie combinée (203) et la borne de sortie (202).

2. Circuit d'émetteur-récepteur (100) selon la revendication 1, dans lequel les bornes d'entrée et de sortie (201, 202) sont respectivement des bornes d'entrée et de sortie dédiées.

3. Circuit d'émetteur-récepteur (100) selon une quelconque des revendications 1 et 2, dans lequel le circuit de générateur (102) possède une impédance de sortie Zout, et dans lequel le rapport ZTx/Zout est essentiellement constant.

4. Circuit d'émetteur-récepteur (100) selon une quelconque des revendications 1 à 3, dans lequel le circuit de générateur (102) est adapté pour générer des signaux périodiques.

5. Circuit d'émetteur-récepteur (100) selon une quelconque des revendications 1 à 4, comprenant en outre un circuit de rétroaction (107) connecté de manière opérationnelle entre la borne d'entrée/sortie combinée (105) et le circuit de générateur (102).

6. Circuit d'émetteur-récepteur (100) selon la revendication 5, dans lequel le circuit de rétroaction (107) est adapté pour mettre en forme, par exemple par filtrage passe-bande, les signaux fournis par le circuit de générateur (102).

7. Circuit d'émetteur-récepteur (100) selon une quelconque des revendications 1 à 6, comprenant en outre une impédance fixe ou variable supplémentaire Zg (405) entre la borne d'entrée/sortie combinée et un potentiel de référence.

8. Circuit d'émetteur-récepteur (100) selon une quelconque des revendications 1 à 7, comprenant en outre un ou plusieurs commutateurs/multiplexeurs contrôlables (110) pour fournir des signaux vers et/ou depuis des transducteurs de réception et/ou d'émission associés (111, 112), le ou les commutateurs/multiplexeurs contrôlables (110) étant fonctionnellement connectés à la borne d'entrée/sortie combinée (105).

9. Débitmètre comprenant un circuit d'émetteur-récepteur (100) selon une quelconque des revendications 1 à 8.

10. Débitmètre selon la revendication 9, comprenant en outre une pluralité de transducteurs (111, 112) pouvant être connectés à la borne d'entrée/sortie combinée (105) de l'amplificateur de transimpédance (101) .

11. Débitmètre selon la revendication 10, dans lequel au moins un certain nombre de la pluralité de transducteurs (111, 112) sont adaptés pour à la fois émettre et recevoir des signaux.

12. Débitmètre selon une quelconque des revendications 8 à 11, comprenant en outre un amplificateur (108) connecté de manière opérationnelle à la borne de sortie (106) de l'amplificateur de transimpédance (101) .

13. Débitmètre selon la revendication 12, dans lequel le gain de l'amplificateur est variable.

14. Débitmètre selon la revendication 13, dans lequel le gain de l'amplificateur est variable à la volée.
